(19) Europäisches Patentamt
European Patent Office
Office européen des brevets

(11) Veröffentlichungsnummer: **0 070 994**
**A1**

(12) # EUROPÄISCHE PATENTANMELDUNG

(21) Anmeldenummer: 82104625.7

(51) Int. Cl.$^3$: **C 08 C 19/00**

(22) Anmeldetag: 27.05.82

(30) Priorität: 23.07.81 DE 3129082

(43) Veröffentlichungstag der Anmeldung: 09.02.83 Patentblatt 83/6

(84) Benannte Vertragsstaaten: AT BE CH DE FR GB IT LI NL SE

(71) Anmelder: CHEMISCHE WERKE HÜLS AG
- RSP Patente / PB 15 - Postfach 13 20
D-4370 Marl 1(DE)

(72) Erfinder: Kampf, Wolfgang, Dr.
Im Wienäckern 60 b
D-4358 Haltern(DE)

(72) Erfinder: Streck, Roland, Dr.
Leverkusener Strasse 12
D-4370 Marl(DE)

(54) **Verfahren zur Herstellung von reaktive Silylgruppen tragenden Homo- oder Copolymeren von 1,3-Dienen.**

(57) Verfahren zur Herstellung von reaktive Silylgruppen tragenden Homo- oder Copolymeren von 1,3-Dienen mit 0,4 bis 12 Gewichtsprozent gebundenem Silicium, wobei man ein 1,3-Dien-Homo- oder Copolymeres vom Molekulargewicht ($\overline{M}n$) 400 bis 8 000 mit einer Siliciumverbindung der allgemeinen Formel I

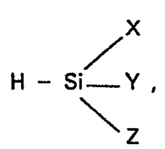

in der X ein hydrolysierbarer Rest ist, Y und Z unabhängig voneinander gleich X, Wasserstoff, ein Alkylrest mit 1 bis 8 Kohlenstoffatomen, ein Cycloalkylrest mit 5 bis 12 Kohlenstoffatomen oder ein gegebenenfalls substituierter Phenylrest sein können, bei einer Temperatur von 150 bis 300°C unter Inertgas umsetzt.

EP 0 070 994 A1

Verfahren zur Herstellung von reaktive Silylgruppen tragenden Homo- oder Copolymeren von 1,3-Dienen

Es ist bekannt, Ruße verschiedener Spezifikationen als Komponente von Kautschukmischungen zu verwenden. Des weiteren ist es bekannt, daß die Zugabe von Ruß weniger zum Zwecke der Verbilligung der aus dieser Mischung hergestellten Vulkanisate als vielmehr zur Anhebung des gesamten Niveaus der anwendungstechnischen Eigenschaften erfolgte. Hier sind vor allem Reißfestigkeit, Modul, Härte, Weiterreiß- und Abriebwiderstand zu nennen. Ruß ist also als ein sogenannter aktiver oder verstärkender Füllstoff zu bezeichnen.

Aus verschiedenen Gründen sind aber einer Verwendung von Ruß in Kautschukmischungen Grenzen gesetzt. Einerseits lassen sich mit ihm nur schwarze, jedenfalls keine farbigen oder weißen Mischungen herstellen. Andererseits sind gute Ruße gegenüber den wohlfeilen mineralischen Füllstoffen, wie Kieselsäure ($SiO_2$), Kaolin, Aluminiumhydroxid und Glas, so teuer geworden, daß ihr Ersatz durch die beispielhaft genannten hellen Füllstoffe in zunehmendem Maße angestrebt wird. Nicht zuletzt auch deswegen, weil durch eine solche Substitution der Anteil von Komponenten auf der Basis des versorgungskrisenabhängigen Rohöls verringert wird. Darüber hinaus ist für die Optimierung bestimmter Eigenschaften, wie z. B. die Kerbzähigkeit, der Einsatz hochaktiver Kieselsäuren von großem Vorteil.

Solche hellen mineralischen Füllstoffe sind bisher zwar schon verwendet worden, jedoch vorwiegend unter dem Gesichtspunkt der reinen Verbilligung, wobei man zunächst beträchtliche Einbußen der anwendungstechnisch wertvollen Eigenschaften, wie z. B. Wärmeabbau, Elastizität und Druckverformungsrest, in Kauf nehmen mußte. Ähnliche Probleme bestehen auch bei der Füllung bzw. Verstärkung von

anderen polymeren Werkstoffen, beispielsweise Polyolefinen oder ungesättigten Polyesterharzen, mit mineralischen Füllstoffen.

Es ist bekannt, daß man diese Nachteile wenigstens teilweise durch die Verwendung sogenannter Haftvermittler beseitigen kann. Dabei handelt es sich - allgemein gesagt - um Substanzen, die sowohl zum Polymeren als auch zum Füllstoff eine gewisse Affinität besitzen, welche sich vorzugsweise in der Fähigkeit zu einer chemischen Reaktion mit den beiden Substraten äußert.

Als Haftvermittler besonders bekannt geworden ist die Gruppe der organofunktionellen Silane. Sie besitzen die allgemeine Formel $R-SiX_3$, wobei X meist eine Alkoxigruppe, seltener ein Halogenatom bedeutet und der organische Rest R eine durch eine funktionelle Gruppe substituierte Alkyl- oder Arylgruppe ist. Diese Verbindungen liefern zwar befriedigende Ergebnisse hinsichtlich der Eigenschaften mit ihrer Hilfe hergestellter Polymer-Füllstoff-Kombinationen, weisen aber einige Nachteile in der Anwendung auf. So sind verschiedene Silane in vulkanisierbaren Kautschuk-Füllstoff-Mischungen jeweils nur für eine bestimmte Art der Vernetzungstechnik optimal anwendbar. Auch gibt es z. B. bei den Mercaptosilanen Geruchsbelästigungen sowie eine Neigung der damit versetzten Mischungen zu vorzeitiger Vulkanisation (Scorch). Darüber hinaus sind organofunktionelle Silane im Vergleich zu den übrigen Komponenten der Gummimischung außerordentlich teuer und im allgemeinen von nicht zu vernachlässigender Toxizität hinsichtlich Inhalation und Hautkontakt.

Es hat weiterhin nicht an Versuchen gefehlt, solche Haftvermittler mit ähnlicher Wirkung auch auf polymerer Basis zu synthetisieren. So ist z. B. bekannt, daß Naturkautschuk und Styrol-Butadien-Kautschuk (SBR) durch Erhitzen mit Trichlorsilan auf ca. 300 °C hydrosiliert werden können (US-PS 2 475 122). Bei dieser Reaktion tritt jedoch

ein unkontrollierbarer Abbau des Kautschuks zu flüssigen Abbauprodukten ein, was dazu führt, daß die eingebrachten reaktiven Silylgruppen nicht in der gewünschten Weise über die Ketten der Abbauprodukte verteilt sind.

Die photochemisch bewirkte Hydrosilierung eines durch anionische Polymerisation erhaltenen flüssigen Polybutadiens wird in der US-PS 2 952 576 beschrieben, deren Gegenstand mit diesem Material beschichtete Glasfasern zur Verstärkung von ungesättigten Polyesterharzen sind. Die Mikrostruktur des verwendeten flüssigen Polybutadiens wird zwar nicht erwähnt; aus den Angaben über seine Herstellung mittels Natriumsuspension läßt sich aber durch Vergleich mit Literaturangaben schließen, daß es etwa 60 bis 70 % Vinyl-Gruppen sowie 30 bis 20 % trans-Vinylen- sowie nur ca. 10 % cis-Vinylen-Gruppen enthält.

Die Katalyse der Hydrosilierung von Polybutadienen durch Platin-Verbindungen wird in den DE-OSS 16 20 934 und 17 20 527 als Zwischenstufe bei der Herstellung von Schaumstabilisatoren bzw. Laminierharzen beschrieben. Diesen Offenlegungsschriften ist keine Lehre zur Anwendung der Reaktionsprodukte auf Kautschuk-Füllstoff-Mischungen zu entnehmen. Zudem handelt es sich wie oben in beiden Fällen um Produkte mit hohem Gehalt an Vinyl-Gruppen, während die restlichen Doppelbindungen überwiegend aus trans-Vinylen-Gruppen bestehen. Polybutadiene dieser Mikrostruktur besitzen selbst bei relativ niedrigen Molekulargewichten eine sehr hohe Viskosität bei Raumtemperatur; ihre Handhabung, Dosierung und Einmischung wird durch diese Konsistenz außerordentlich erschwert. Die gleiche Einschränkung gilt für ihre hydrosilierten Derivate.

Die konventionelle Pt-Katalyse der Hydrosilierung wird auch in der US-PS 3 759 869 beschrieben, in der Polymere beansprucht werden, welche Molekulargewichte zwischen 500 und 50 000 besitzen und zu wenigstens 25 Gewichtspro-

zent die Struktur

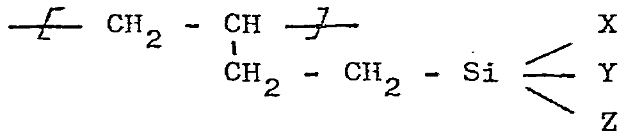

enthalten.

Dies entspricht im Falle eines reinen Polybutadiens als Basispolymer der Anbringung einer reaktiven Silylgruppe $-SiX_3$ an etwa jeder zehnten Monomereinheit. Aus den Beispielen ist nur die Hydrosilierung eines Polybutadiens mit einem durchschnittlichen Molekulargewicht von 1 000 und einem Vinyl-Gruppen-Gehalt von 90 %, bezogen auf gesamte Doppelbindungen, und zwar unter praktisch 100 %iger Absättigung sämtlicher vorhandenen Vinyl-Gruppen zu entnehmen. Mischungen solcher Produkte bzw. ihrer durch Folgereaktionen erhaltenen Derivate mit niedermolekularem Polypropylen (Molekulargewicht 5 000) bzw. EPM-Kautschuk werden lediglich erwähnt, ohne daß etwas über ihre Wirksamkeit ausgesagt wird. Zudem eignen sich solche weitestgehend abgesättigten Polybutadien-Derivate bzw. damit ausgerüstete Füllstoffe - allein aufgrund des Mangels an Doppelbindungen - nur schlecht für den Verbund mit einem durch Schwefel- oder Peroxid-Vulkanisation entstehenden Polymernetzwerk.

Die DE-OS 23 43 108 beansprucht die Hydrosilierung von Kautschukpolymeren, welche wenigstens vorzugsweise 5 bis 30 Gewichtsprozent Vinyl-Gruppen enthalten, und ihre Verwendung als Kupplungsmittel für die Vulkanisation eines ein kieselsäurehaltiges Pigment enthaltenden vulkanisierbaren Kautschuks. Es handelt sich um Produkte, die wegen ihres hohen Molekulargewichts nur in Lösung anwendbar sind.

Demgegenüber wird in der DE-AS 26 35 601 die Verwendung von Hydrosilierungsprodukten spezieller Polybutadienöle mit Molekulargewichten von 400 bis 6 000 beschrieben, die dank ihrer Mikrostruktur (10 bis 60 % Vinyl-Gruppen, 1

bis 15 % trans-Vinylen- und 25 bis 85 % cis-Vinylen-Gruppen) besonders niedrige Viskositäten aufweisen und daher gut unverdünnt gehandhabt werden können. Den Hydrosilierungsprodukten haftet jedoch der Nachteil an, daß der bei ihrer Herstellung verwendete Platinkatalysator weitgehend im Produkt verbleibt und damit verloren geht.

Bekannt ist auch die Umsetzung von lithium-terminierten "lebenden Polymeren" mit einem Überschuß eines Tetrahalogeno- bzw. Tetraalkoxisilans gemäß dem Verfahren der US-PS 3 244 664. Dieser Überschuß, der zur Vermeidung von Kupplungs- bzw. Vernetzungsreaktionen angewandt werden muß, läßt sich praktisch nicht abtrennen und geht somit bei der weiteren Aufarbeitung verloren.

Weiterhin sind aus der deutschen Patentanmeldung P 30 10 113.4 (DE-OS 30 10 113) reaktive Silylgruppen tragende Homo- oder Copolymere von 1,3-Dienen bekannt, die 0,4 bis 9 Gewichtsprozent gebundenes Silicium enthalten und durch Umsetzung eines metallierten 1,3-Dien-Homo- oder Copolymeren vom Molekulargewicht ($\bar{M}n$) 400 bis 8 000 mit einer Siliciumverbindung der allgemeinen Formel

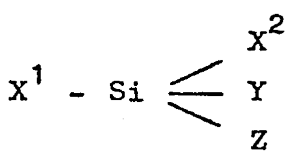 ,

in der $X^1$ ein Halogenatom oder eine Alkoxigruppe und $X^2$ eine hydrolysierbare Gruppe bedeuten, Y und Z gleich $X^2$, aber auch Wasserstoff oder ein Alkylrest mit 1 bis 8 Kohlenstoffatomen, ein Cycloalkylrest mit 5 bis 12 Kohlenstoffatomen oder ein gegebenenfalls substituierter Phenylrest sein können, bei einer Temperatur von 0 bis 80 °C erhalten werden. Nachteilig ist dabei die vorherige Metallierung des niedermolekularen Basispolymeren.

Die Addition von Sulfhydrylgruppen eines Mercaptosilans - z. B. des $\gamma$-Mercaptopropyltriethoxisilans - an Doppel-

bindungen eines ungesättigten Polymeren wurde mehrmals beschrieben (US-PS 3 440 302, DE-OSS 23 33 566 und 23 33 567), hat aber den Nachteil eines sehr teuren und übelriechenden Einsatzmaterials.

Weiterhin sind Verfahren bekannt, welche durch Verwendung von silylgruppenhaltigen Peroxi- (DE-OSS 21 52 295 und 21 52 286) bzw. Azo-Verbindungen (J. Appl. Pol Sci 18, 3259 (1974) als Initiatoren oder von Silylgruppen haltigen Disulfiden (DE-OS 21 42 596) als Kettenüberträgern der radikalischen Polymerisation zu Polymeren mit reaktiven Silylgruppen führen. Auch hier trifft zu, daß die zur Einführung der Silylgruppen benutzten Hilfsstoffe schwierig zugänglich, sehr teuer und meist im Handel überhaupt nicht erhältlich sind. Außerdem lassen sich auf diesem Wege maximal zwei reaktive Silylgruppen - und zwar an den Enden der Polymerkette - einführen. Produkte mit höherem Siliciumgehalt, die zur Erzielung bestimmter Effekte, z. B. erhöhter Selbstvernetzung, erwünscht sein können, können also auf diesem Wege nicht hergestellt werden.

Silylgruppen haltige Polyalkenamere können zwar leicht durch Verwendung von Silylolefinen (DE-PS 21 57 405) bzw. Silylcycloolefinen (DE-AS 23 14 543) als Regler bzw. (Co-) Monomere bei der ringöffnenden Polymerisation von Cycloolefinen hergestellt werden; für die allgemeine Anwendung begrenzend ist jedoch auch hier die wirtschaftliche Verfügbarkeit der Reaktanden.

Schließlich sind aus den deutschen Patentanmeldungen P 30 03 893.8 (DE-OS 30 03 893) und P 30 28 839.2 (DE-OS 30 28 839) reaktive Silylgruppen tragende Homo- oder Copolymere von 1,3-Dienen bekannt, die 0,4 bis 12 Gewichtsprozent gebundenes Silicium enthalten und durch Umsetzung eines einmal mehr und einmal weniger als 1 % seiner aliphatischen Doppelbindungen in Konjugation enthaltenden 1,3-Dien-Homo- oder Copolymeren vom Molekulargewicht ($\overline{M}n$) 400 bis 6 000 mit einer Siliciumverbindung der allgemei-

nen Formel

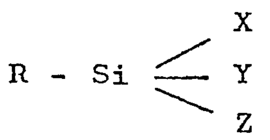,

in der R ein ungesättigter aliphatischer Kohlenwasserstoffrest mit 2 bis 20 Kohlenstoffatomen und X ein hydrolysierbarer Rest sind, Y und Z unabhängig voneinander gleich X, Wasserstoff oder ein Alkylrest mit 1 bis 8 Kohlenstoffatomen, ein Cycloalkylrest mit 5 bis 12 Kohlenstoffatomen oder ein gegebenenfalls substituierter Phenylrest sein können, bei einer Temperatur von 190 bis 300 °C erhalten werden.

Aufgabe der vorliegenden Erfindung war es nun, ein Verfahren zur Herstellung von reaktive Silylgruppen tragenden Homo- oder Copolymeren von 1,3-Dienen enger Molekulargewichtsverteilung zu entwickeln, daß es gestattet, von leicht zugänglichen und wohlfeilen polymeren Ausgangsmaterialien auszugehen, die in ihrer handelsüblichen Form direkt nach der Polymerisation eingesetzt werden können, ohne Verlust an wertvollen Edelmetallen oder die kostspielige Metallierung, unter vereinfachten Aufarbeitungsbedingungen, mit in weiten Grenzen variierbarem Gehalt an reaktiven Silylgruppen und mit gleichmäßiger Verteilung der Silylgruppen über die Ketten des Basispolymeren.

Diese Aufgabe wurde erfindungsgemäß durch die in den Ansprüchen beschriebenen Maßnahmen gelöst.

Ausgangsprodukte für das erfindungsgemäße Verfahren sind somit einmal 1,3-Dien-Homo- und Copolymere mit Molekulargewichten ($\overline{M}n$) von 400 bis 8000 (gemessen mit Hilfe von Gelpermeationschromatographie) und zum anderen die Siliciumverbindungen der allgemeinen Formel I:

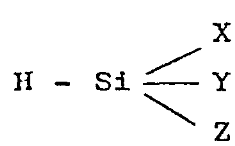.

Unter Homo- und Copolymeren von 1,3-Dienen werden im Rahmen dieser Erfindung verstanden: Homopolymerisate von z. B. Butadien-(1,3), Isopren, 2,3-Dimethylbutadien und Piperylen, Copolymerisate dieser 1,3-Diene untereinander sowie Copolymerisate dieser 1,3-Diene mit vinylsubstituierten aromatischen Verbindungen, wie z. B. Styrol, α-Methylstyrol, Vinyltoluol und Divinylbenzol.

Bevorzugt werden bei dem erfindungsgemäßen Verfahren Polybutadiene mit Molekulargewichten ($\overline{M}n$) von 600 bis 3 000 eingesetzt. Die Mikrostruktur der Diene in den Homo- und Copolymeren bzw. in den genannten Reaktionsprodukten ist nicht kritisch. Im allgemeinen werden Homo- oder Copolymere mit folgender Verteilung der Doppelbindungen eingesetzt:

0 bis 60 % Vinylgruppen
1 bis 50 % trans-Vinylen-Gruppen,
10 bis 85 % cis-Vinylen-Gruppen.

Daneben können bis zu 40 % alicyclische Strukturen vorhanden sein. Auch kann ein Teil der isolierten Doppelbindungen mit Hilfe eines Isomerisierungskatalysators in konjugierte Doppelbindungen nach einem bekannten Verfahren des Standes der Technik (DE-OSS 29 24 548, 29 24 577 und 29 24 598) überführt worden sein.

Solche Produkte können nach vielen bekannten Verfahren des Standes der Technik (z. B. DE-PS 11 86 631, DE-AS 12 12 302, DE-PS 12 92 853, DE-OS 23 61 782 und DE-OS 23 42 885) hergestellt werden.

Erfindungsgemäß werden die reaktiven Silylgruppen durch Umsetzung mit einer Siliciumverbindung der allgemeinen Formel I in das 1,3-Dien-Homo- oder Copolymere eingeführt. In dieser allgemeinen Formel I steht X für einen hydrolysierbaren Rest, wie z. B. Halogen, vorzugsweise

Chlor und Brom, Alkoxy, vorzugsweise mit bis zu 4 Kohlenstoffatomen, Aroxy, vorzugsweise mit 6 bis 12 Kohlenstoffatomen, Carboxylat, vorzugsweise mit bis zu 8 Kohlenstoffatomen, Ketoxymat, vorzugsweise mit bis zu 6 Kohlenstoffatomen in der Ketogruppe, oder Amid, mit vorzugsweise bis zu 12 Kohlenstoffatomen. Y und Z können gleich X sein, daneben aber auch Wasserstoff, ein Alkylrest mit 1 bis 8 Kohlenstoffatomen, ein Cycloalkylrest mit 5 bis 12 Kohlenstoffatomen oder ein gegebenenfalls substituierter Phenylrest.

Typische einsetzbare Silane sind beispielsweise Trichlorsilan, Trimethoxysilan, Triethoxysilan, Tripropoxysilan, Tribromsilan, Methyldichlorsilan, Methyldibromsilan, Methyldijodsilan, Methyldimethoxysilan, Methyldiethoxysilan, Methylmethoxychlorsilan, Ethyldipropoxysilan, Phenyldibutoxysilan, Methoxyethoxychlorsilan. Besonders bevorzugt ist die Anlagerung von Trichlorsilan.

Die mögliche Umwandlung der mit halogenhaltigen Silanen eingebrachten Halogensilylgruppen, vorzugsweise Chlorsilylgruppen in andere reaktive Silylgruppen kann beispielsweise im Laufe der Aufarbeitung, z. B. durch Zugabe von vorzugsweise Alkoholen, Trialkylorthoformiaten, Epoxiden, Natriumacetat usw. nach bekannten Reaktionen des Standes der Technik erfolgen. Eine derartige Umwandlung kann allerdings unterbleiben, wenn das flüssige Hydrosilierungsprodukt vorteilhafterweise direkt auf einen mineralischen Füllstoff aufgebracht wird und man für Beseitigung des bei dieser Reaktion freiwerdenden Halogenwasserstoffs, im bevorzugten Falle Chlorwasserstoff, sorgt, der in diesem Falle trocken und nicht als Lösung in Alkohol oder Alkylchlorid anfällt, also weiter genutzt werden kann.

Die Anlagerungsreaktion zwischen den 1,3-Dien-Homo- oder Copolymeren und den Siliciumverbindungen der allgemeinen

BAD ORIGINAL

Formel I wird durch Erhitzen der Reaktanten auf Temperaturen von 150 bis 300 °C, vorzugsweise von 200 bis 280 °C, unter Inertgas durchgeführt. Das Silan wird dabei im allgemeinen bis zu einem zehnfachen molaren Überschuß eingesetzt. Die Reaktionszeiten betragen je nach gewählter Reaktionstemperatur 1 bis 12 Stunden, vorzugsweise 3 bis 6 Stunden.

Für die Anlagerung ist erhöhter Druck nur insofern erforderlich, als der Dampfdruck des angelagerten Silans bei der gewählten Reaktionstemperatur > 1 bar beträgt. Die Anlagerung des Silans an das 1,3-Dien-Homo- oder Copolymere kann auch in Gegenwart eines organischen Lösemittels durchgeführt werden.

Die besonders niedrige Viskosität der einsetzbaren 1,3-Dien-Homo- und Copolymeren erleichtert sowohl die Durchführung der Anlagerungsreaktion, da diese dadurch im allgemeinen ohne Zusatz eines sonst erforderlichen Lösemittels durchgeführt werden kann, als auch die Aufarbeitung und die Handhabung der Anlagerungsprodukte. Die Arbeitsweise bei der Herstellung wird dadurch außerdem nicht nur wirtschaftlicher, sondern auch umweltfreundlicher, da Lösemittel weder verbraucht noch später an Abwasser oder Atmosphäre abgegeben werden müssen.

Die Aufarbeitung der reaktive Silylgruppen tragenden Homo- oder Copolymeren von 1,3-Dienen erfolgt - sofern überhaupt erforderlich - durch Abziehen von nicht umgesetztem Silan im Vakuum.

Der gewünschte Gehalt an gebundenem Silicium von 0,4 bis 12, vorzugsweise 1 bis 5 Gewichtsprozent bzw. die angelagerte Menge an Silan und damit die Anzahl der im Anlagerungsprodukt durchschnittlich vorhandenen reaktiven

Silylgruppen läßt sich über die Menge des angebotenen Silans einstellen. Er richtet sich in erster Linie nach dem speziellen Verwendungszweck des Anlagerungsproduktes. So steigert eine Erhöhung des Gehaltes an reaktiven Silylgruppen die Reaktivität der Anlagerungsprodukte und ihre Neigung zur Ausbildung eines Netzwerkes von höherer Vernetzungsdichte durch Polykondensation der nach Hydrolyse entstandenen Silanolgruppen. Diese Eigenschaften können beispielsweise bei einer Reihe von Anwendungen der erfindungsgemäßen reaktive Silylgruppen tragende Homo- oder Copolymeren von 1,3-Dienen, z. B. auf dem Gebiet der Klebstoffe. Isolier- und Dichtungsmassen, wertvoll sein.

In erster Linie finden die nach dem erfindungsgemäßen Verfahren hergestellten Anlagerungsverbindungen jedoch Verwendung als Haftvermittler bei der Herstellung von Mischungen aus Polymeren, vorzugsweise Kautschuken, mineralischen Füllstoffen und gegebenenfalls weiteren Zusatzstoffen. Sie können dabei sowohl vor der Herstellung der Mischung in Substanz oder Lösung auf den mineralischen Füllstoff aufgebracht als auch während der Herstellung der Mischung dieser zugegeben werden.

Als mineralische Füllstoffe eignen sich beispielsweise Kieselsäuren ($SiO_2$) und Silicate (wie Kaolin, Talkum, Asbest, Glimmer, Glasfasern, Glaskugeln, synthetische Ca-, Mg- und Al-Silicate, Portland-Zement, Hochofenschlacke), Aluminiumhydroxid und -oxid (hydrat)e, Eisen(hydr)oxid(e).

Verwendbare Kautschuke sind alle üblichen, durch Peroxide bzw. Schwefel vulkanisierbaren Typen, wie beispielsweise Naturkautschuk, synth. Polyisopren, Polybutadien, Styrol-Butadien-Copolymere, Polyalkenamere (wie Polypentenamere, Polyoctenamere oder Polydodecenamere), Ethylen-Propylen-Copolymere (EPM), Ethylen-Propylen-Dien-Terpolymere (EPDM), Isobutylen-Isopren-Copolymere (Butylkautschuk), Butadien-Acrylnitril-Copolymere.

Außerdem sind auch andere Polymere - wie z. B. Polyethylen, Polypropylen, Polybutylen, Polyvinylchlorid, Ethylen-Vinylacetat-Copolymere, Polystyrol - gegebenenfalls unter Zusatz von Radikalbildnern, wie Dicumylperoxid, mit Hilfe der nach dem erfindungsgemäßen Verfahren herstellbaren polymeren Haftvermittler durch mineralische Füllstoffe verstärkbar.

Weiterhin ist es möglich, die Silylgruppen tragenden Homo- und Copolymere von 1,3-Dienen auf alle genannten elastomere und thermoplastische Polymere durch radikalische Umsetzung aufzupfropfen. Dadurch wird den Umsetzungsprodukten die Fähigkeit zur Vernetzung durch Wasser verliehen. Gegebenenfalls können dabei Katalysatoren, wie sie bei der Silanolkondensation Verwendung finden, zugesetzt werden. Als solche kommen z. B. Di-n-butyl-zinn-dilaurat und Zinn(II)-octoat infrage.

Unter Zusatzstoffen, die den Mischungen aus Polymeren, vorzugsweise Kautschuken, mineralischem Füllstoff und erfindungsgemäßem Haftvermittler gegebenenfalls zugesetzt werden können, werden vor allem Vulkanisationsagenzien und Weichmacher verstanden.

Als Vulkanisationsagenzien kommen in erster Linie Schwefel in Kombination mit den bekannten Vulkanisationsbeschleunigern unter Zusatz von Zinkoxid und höheren Fettsäuren, wie z. B. Stearinsäure, infrage. Mit gleichem Erfolg sind auch Peroxide oder spezielle Schwefelspender, wie z. B. N,N'-Morpholindisulfid oder spezielle Thiurame zur Vernetzung möglich.

Als Weichmacher sind die bekannten Raffinerieprodukte zu nennen. Dabei können Öle mit vorwiegend aromatischen, naphthenischen oder paraffinischen Bestandteilen Verwendung finden. Des weiteren können selbstverständlich alle bekannten Alterungsschutzmittel beigefügt werden.

Die nach dem erfindungsgemäßen Verfahren hergestellten Produkte eignen sich ferner als Zusätze zur Verbesserung der Eigenschaften von Klebstoffen, Kitten, Dichtungs- und Spachtelmassen, als Mittel zur Dispergierung von Pigmenten Hydrophobierung von Substraten wie Papier, Textilien, Holz, Karton und Baustoffen sowie zur Bodenverfestigung.

Alle Prozentangaben - auch in den nachfolgenden Beispielen, die die vorliegende Erfindung erläutern - sind, sofern nicht anders angegeben, Gewichtsprozente.

Als Test auf den Einbau des analytisch gefundenen Siliciums in das Polybutadienöl wird die Vernetzbarkeit durch Wasser bestimmt. Dazu werden jeweils 2,0 g des Produktes in 40 ml Hexan gelöst, 1,0 ml einer 5 %igen Lösung von Dibutylzinndilaurat in Hexan zugesetzt und die Lösung auf Wasser in einer Schale (Oberfläche 600 $cm^2$) gegossen. Nach 24stündigem Stehen bei Raumtemperatur hat sich ein fester Polymerfilm gebildet, dessen bei Raumtemperatur (25 °C) in Toluol unlösliche Anteile (Gelgehalt) nach vorhergehendem Trocknen bestimmt werden.

Beispiel 1

225 g Polybutadienöl ($\overline{M}n$ 1 500; Viskosität bei 20 °C 750 mPa s; 78 % cis-1,4-, 21 % trans-1,4- und 1 % Vinyl-Struktur) wurden bei Stickstoffgegenstrom zusammen mit 75 g $SiHCl_3$ in einen 0,5 l-Autoklaven eingefüllt. Nach dem Verschließen des Autoklaven wurde das Gemisch unter Rühren auf 235 °C gebracht und 7 1/2 Stunden bei dieser Temperatur gehalten. Nach dem Aufheizen stieg der Druck im Autoklaven auf ca. 20 bar. Der Autoklaveninhalt wurde danach abgekühlt, unter Schutzgas ($N_2$) abgelassen und nicht umgesetztes $SiHCl_3$ während 2 Stunden bei 100 °C/ 1 mbar entfernt.

Das nach der Vakuumaufarbeitung zurückbleibende Öl hatte 4,3 % Si (≙ 82,8 % Anlagerung). Die Viskosität war auf 52 000 mPa s gestiegen. Nach dem Vernetzungstest wurden 100 % Gel gefunden.

Beispiele 2 bis 7

Das Polybutadienöl von Beispiel 1 wurde wiederum eingesetzt. Das Gewichtsverhältnis von Polybutadienöl : $SiHCl_3$ betrug 2 : 1. Für die Anlagerungsreaktion wurden unterschiedliche Zeiten und Temperaturen gewählt, die aus Tabelle 1 ersichtlich sind.

Tabelle 1

| Beispiel | T [°C] | t [h] | Si [%] | Umsetzung [%] | Gel [%] | Viskosität bei 20 °C [mPa s] |
|---|---|---|---|---|---|---|
| 2 | 200 | 1 | 2,1 | 30,8 | 88 | 2 200 |
| 3 | 225 | 3 | 2,0 | 29,0 | 88 | 2 100 |
| 4 | 225 | 5 | 3,3 | 47,8 | 100 | 3 700 |
| 5 | 225 | 7,5 | 3,7 | 53,5 | 100 | 4 500 |
| 6 | 240 | 0,5 | 2,0 | 29,0 | 95 | 11 000 |
| 7 | 240 | 1 | 5,6 | 81,0 | 94 | 25 000 |

Die Spalte "Umsetzung" wurde aus dem Verhältnis von eingesetztem zu angelagertem Silan berechnet.

Beispiel 8

225 g Polybutadienöl der Beispiele 2 bis 7 wurden im Autoklaven während 5 Stunden bei 250 °C mit 75 g $SiH(OCH_3)_3$ umgesetzt. Nach dem Abziehen von nicht umgesetztem Silan im Vakuum unter den in Beispiel 1 beschriebenen Bedingungen blieb ein Öl mit 0,6 % Si zurück (≙ 10,43 % Anlagerung). Das Produkt hatte eine Viskosität von 28 500 mPa s bei 20 °C. Nach dem Vernetzungstest betrug der Gelgehalt 48 %.

Patentansprüche:

1. Verfahren zur Herstellung von reaktive Silylgruppen tragenden Homo- oder Copolymeren von 1,3-Dienen mit 0,4 bis 12 Gewichtsprozent gebundenem Silicium, dadurch gekennzeichnet, daß man ein 1,3-Dien-Homo- oder Copolymeres vom Molekulargewicht ($\overline{M}n$) 400 bis 8 000 mit einer Siliciumverbindung der allgemeinen Formel I

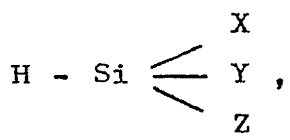

in der X ein hydrolysierbarer Rest ist, Y und Z unabhängig voneinander gleich X, Wasserstoff, ein Alkylrest mit 1 bis 8 Kohlenstoffatomen, ein Cycloalkylrest mit 5 bis 12 Kohlenstoffatomen oder ein gegebenenfalls substituierter Phenylrest sein können, bei einer Temperatur von 150 bis 300 °C unter Inertgas umsetzt.

2. Verfahren nach Anspruch 1, dadurch gekennzeichnet, daß in der Siliciumverbindung der allgemeinen Formel I Y und Z gleich X sind und X gleich Chlor oder Alkoxy mit 1 bis 4 Kohlenstoffatomen ist.

3. Verfahren nach Anspruch 2, dadurch gekennzeichnet, daß man als Siliciumverbindung der allgemeinen Formel I Trichlorsilan einsetzt.

4. Verwendung der nach dem Verfahren der Ansprüche 1 bis 3 erhaltenen reaktive Silylgruppen tragenden 1,3-Dien-Homo- oder Copolymeren als Haftvermittler bei der Herstellung von Mischungen aus Polymeren, mineralischen Füllstoffen und gegebenenfalls weiteren Zusatzstoffen.

5. Verwendung der reaktive Silylgruppen tragenden 1,3-Dien-Homo- oder Copolymeren nach Anspruch 4, dadurch gekennzeichnet, daß man als Polymere natürliche und/oder synthetische Kautschuke einsetzt.

6. Verwendung der nach dem Verfahren der Ansprüche 1 bis 3 erhaltenen reaktive Silylgruppen tragenden 1,3-Dien-Homo- oder Copolymeren als Pfropfkomponente für die Herstellung von mit Wasser vernetzbaren Pfropfcopolymeren auf der Basis von elastomeren und thermoplastischen Polymeren.

0070994

Europäisches Patentamt

# EUROPÄISCHER RECHERCHENBERICHT

Nummer der Anmeldung

EP 82 10 4625

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
| X | US-A-4 230 815 (K. ITOH et al.) * Spalte 2, Zeilen 13-41; Spalte 3, Zeilen 36-54; Spalte 4, Zeilen 41-47 * | 1-3 | C 08 C 19/00 |
| A | FR-A-2 360 613 (HÜLS) * Anspruch 1 * & DE - A - 2 635 601 (Cat. D) | 1-5 | |
| P,A | EP-A-0 042 481 (HÜLS) * Ansprüche 1-6 * & DE - A - 3 028 839 (Cat. D) | 1-6 | |
| | | | RECHERCHIERTE SACHGEBIETE (Int. Cl. 3) |
| | | | C 08 C 19/00 |

Der vorliegende Recherchenbericht wurde für alle Patentansprüche erstellt.

| Recherchenort | Abschlußdatum der Recherche | Prüfer |
|---|---|---|
| DEN HAAG | 01-11-1982 | VAN HUMBEECK F.W.C. |

KATEGORIE DER GENANNTEN DOKUMENTEN
- X : von besonderer Bedeutung allein betrachtet
- Y : von besonderer Bedeutung in Verbindung mit einer anderen Veröffentlichung derselben Kategorie
- A : technologischer Hintergrund
- O : nichtschriftliche Offenbarung
- P : Zwischenliteratur
- T : der Erfindung zugrunde liegende Theorien oder Grundsätze
- E : älteres Patentdokument, das jedoch erst am oder nach dem Anmeldedatum veröffentlicht worden ist
- D : in der Anmeldung angeführtes Dokument
- L : aus andern Gründen angeführtes Dokument
- & : Mitglied der gleichen Patentfamilie, übereinstimmendes Dokument

EPA Form 1503 03 82